**Europäisches Patentamt**

**European Patent Office**

**Office européen des brevets**

(11) Numéro de publication: **0 075 495**
**A1**

# (12) DEMANDE DE BREVET EUROPEEN

(21) Numéro de dépôt: **82400855.1**

(22) Date de dépôt: **10.05.82**

(51) Int. Cl.³: **H 04 N 9/31**

(30) Priorité: **15.05.81 FR 8110178**

(43) Date de publication de la demande: **30.03.83**
**Bulletin 83/13**

(84) Etats contractants désignés: **DE GB IT**

(71) Demandeur: **HOMESTEAD PRODUCTIONS INC.,
565 Fifth Avenue, New York N.Y. 10017 (US)**

(72) Inventeur: **Elguiz, Micheline, 2700 NE 24 th Street,
Lighthouse Point Florida 33064 (US)**

(74) Mandataire: **Schrimpf, Robert et al, Cabinet
Regimbeau 26, Avenue Kléber, F-75116 Paris (FR)**

(54) **Télé-projecteur, télé-cinéma.**

㉗ L'invention a pour object un dispositif pour la projection d'images de télévision sur grand écran.

Il est composé d'un boîtier (3) qui contient une platine (2) qui porte le tube cathodique couleurs (1) dont l'axe est dans l'axe optique (XY), à sa partie avant est disposée une unique optique (13) qui est composée de deux lentilles ($L_1$ et $L_2$) convergentes, à échelons de Fresnel, les faces planes sont orientées vers l'intérieur de l'objectif (13). Le boîtier (3) peut être basculé, en pivotant sur ses roulettes arrière et en dégageant les roulettes avant du sol et ainsi reposer sur sa partie arrière qui est en porte-à-faux, pour être en position de projection.

L'invention s'applique à la projection d'images télévisées sur grand écran.

0075495

L'invention a pour objet un dispositif pour la projection d'images de télévision sur grand écran.

La télévision sur grand écran est actuellement réservée aux professionnels et non à l'équipement familial, du fait notamment du prix des appareils sur le marché.

En effet, les tubes "images" de télévision peuvent atteindre actuellement 67 centimètres de diagonale. Cette dimension est considérée presque comme maximale pour des tubes à vide.

D'autres techniques sont en cours d'étude ou d'expérimentation :

- images obtenues par faisceau laser.

- utilisation d'écrans plats (sans épaisseur).

Il existe d'autres appareils dont la complexité et le prix font qu'ils sont pratiquement réservés aux studios professionnels :

- Le professeur Fischer et le Dr Thiemann ont perfectionné un dispositif en rendant possible la projection simultanée d'une image complète.

A l'optique de Toepler, est ajouté un disque de verre portant à sa partie supérieure, une mince couche d'une huile spéciale. Le canon électronique analyse une surface rectangulaire qui constitue l'image projetée sur l'écran après modulation du pouvoir de diffraction de la surface. Pour faire varier la quantité de lumière diffractée en fonction du signal de télévision, on procède de la façon suivante : le faisceau cathodique n'est pas modulé en amplitude; sa vitesse varie suivant une loi sinusoïdale et l'amplitude de cette variation est modifiée selon l'amplitude du signal de télévision. Ce signal est appliqué aux deux électrodes supplémentaires de déviation du faisceau. Les électrons frappant la partie supérieure de la couche d'huile déposent des charges électriques sur cette surface; la plaque de verre est métallisée et la force électrostatique qui agit de part et d'autre de la couche d'huile, déforme sa surface.

Par ce procédé, on a donc bien imprimé un réseau optique dont les entailles sont plus ou moins profondes suivant l'intensité du signal de télévision au point considéré.

- Un autre système de projection a été présenté récemment par les laboratoires Electroniques et Physiques. Il fait appel à la lumière polarisée et aux nicols croisés (polariseurs) qui furent utilisés pour les premières images de télévision (cellules de Kerr 1930) et pour les premiers projecteurs de télévision sur écran (Scophony 1938).

L'utilisation de couches cristallines suit l'évolution technique générale qui a conduit aux transistors et aux circuits intégrés. Un nouveau tube image à transparence variable spatio-temporelle fait appel à l'effet Pokels et utilise une lame cristalline de phosphate diacide de potassium ($KH_2PO_4$) ou ($KD_2PO_4$) comme élément sensible.

Le récepteur de télévision à grand écran plat n'est pas encore réalisé. C'est pourquoi les techniciens se sont tournés vers la vidéoprojection sur grand écran opaque ou translucide. Cette vidéoprojection consiste à reprendre le signal de télévision tel qu'il parvient actuellement à un téléviseur et à le projeter avec un dispositif optique pour l'agrandir. En couleurs, il est nécessaire de projeter à travers trois objectifs et trois filtres, un par couleur de base (bleu, vert, rouge) qui projettent en superposition, sur un écran rigide, incurvé, les trois images primaires.

Il est évident que le problème essentiel est un problème de réglage qui consiste à superposer parfaitement les trois images afin d'obtenir une image en couleurs ne comportant aucune frange colorée sur les contours des sujets. Il s'ensuit que les positions du projecteur et de l'écran doivent être rigoureusement choisies puis maintenues.

Toutes ces contraintes ne sont guère supportables par l'utilisateur non professionnel. De plus, ces appareils sont lourds et très coûteux. Ils doivent comporter trois tubes. Pour des écrans pouvant atteindre 1,20 mètre à 1,50 mètre, ces appareils pèsent plus de 120 Kilogrammes.

La consommation d'énergie électrique est importante, de l'ordre de 250 Watts/heure. Ces appareils sont encombrants, ils peuvent occuper une surface au sol de plus de 1 m2.

Les solutions actuelles ne peuvent aller vers un grand développement de la vidéoprojection.

Le dispositif, selon l'invention, évite tous ces inconvénients.

- il ne comporte qu'un seul tube cathodique couleurs,

- qu'une seule optique à très faibles pertes lumineuses,

- il est adaptable à tous les téléviseurs actuels et à tous les procédés standards de télévision connus à ce jour.

    - il consomme peu d'électricité, 100 watts/heure,

    - il n'occupe environ que 0,3 m2 seulement, écran non compris,

    - son utilisation est très simple pour le non professionnel,

    - enfin son prix est de quatre à cinq fois moindre que celui des appareils cités plus haut.

Le dispositif, selon l'invention, ne comporte qu'un seul tube cathodique couleurs et qu'une seule optique à très faibles pertes lumineuses. L'optique est formée de deux lentilles convergentes dites de Fresnel comportant de nombreux cercles concentriques par millimètre.

La tension de l'appareil de télévision est supérieure à la tension normale, c'est-à-dire que si la tension normale est de 18 KV, la tension préconisée peut être de 23 KV.

Le fait d'adapter des lentilles à échelons de Fresnel à l'optique du dispositif, permet de projeter sur grand écran. En effet, avec des lentilles courantes, il faut utiliser des lentilles de grand diamètre et de grande épaisseur. Ces lentilles déforment donc l'image et absorbent de la lumière d'où une chute de la luminosité de l'écran.

Les téléviseurs actuels n'ont pas leur tube cathodique exactement dans l'axe optique. L'axe du tube cathodique forme, avec l'axe optique un angle d'environ 3°. Il est donc nécessaire d'utiliser un tube cathodique qui soit dans l'axe optique.

Le tube cathodique est maintenu rigoureusement en place par une platine porte-tube cathodique. Cette platine est disposée dans un boîtier. Le boîtier comporte un objectif composé de deux lentilles à échelons de Fresnel. Entre les deux lentilles peut être disposé un diaphragme. Ces deux lentilles convergentes sont orientées de manière à ce que la face plane soit disposée vers l'intérieur de l'objectif.

Le boîtier est monté sur des roulettes disposées de manière à ce que le meuble puisse adopter deux positions, une position horizontale pour rouler et une position de projection sur écran géant dans laquelle l'axe du faisceau lumineux forme avec l'horizontale, un angle voisin de 20°. Le changement de position du boîtier s'effectue en le basculant pour qu'il repose sur un coin de sa partie arrière et que les roulettes avant soient dégagées du sol, tandis que les roulettes qui restent en contact, font office de pivot pour le basculement du boîtier projecteur.

Les dessins ci-joints donnés à titre d'exemple indicatif et non limitatif permettront aisément de comprendre l'invention. Ils représentent un mode de réalisation préféré selon l'invention.

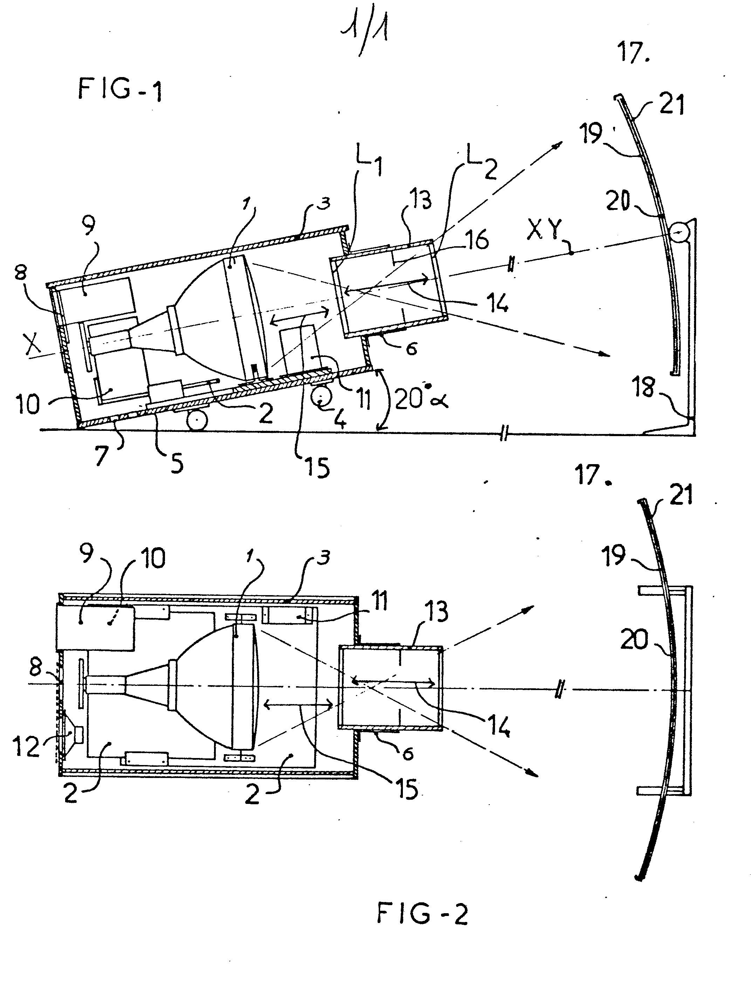

La figure 1 est une vue en coupe du dispositif, vu en élévation, en position de projection.

La figure 2 est une vue en coupe, vue de dessus, du dispositif.

Le tube cathodique trois couleurs 1 est maintenu en place rigoureusement et exactement dans l'axe du faisceau lumineux XY par une platine porte-tube cathodique 2. Cette platine 2 est disposée dans un boîtier 3 monté sur des roulettes 4. Ces roulettes 4 sont disposées de telle manière que le boîtier 3 puisse être basculé en arrière. A cet effet, une partie arrière 5 du boîtier 3 est en porte-à-faux. Le boîtier 3 peut ainsi, en position de projection, reposer sur son coin arrière 6 avec les roues avant dégagées du sol. En position de projection, l'axe du faisceau lumineux XY forme, avec le sol, un angle $\alpha$ d'environ 20°.

Le boîtier 3 est pourvu, également, d'orifices 7 et 8 pour la ventilation.

Dans ce boîtier 3 sont disposés les circuits électroniques 9, 10 et 11 et les hauts-parleurs 12. L'objectif de projection 13 est à deux lentilles à échelons de Fresnel $L_1$ et $L_2$, convergentes, comportant une face plane et une face constituée de cercles concentriques dont le profil est conforme au principe des lentilles à échelons de Fresnel, par exemple, vingt six cercles concentriques par millimètre. Les faces planes des lentilles $L_1$ et $L_2$ sont orientées vers l'intérieur de l'objectif 13.

A titre d'exemple, les caractéristiques techniques suivantes sont communiquées pour un écran cathodique de 36 centimètres de diagonale :

Si la tension d'alimentation normale est de 18 KV, la tension préconisée est de 23 KV.

L'objectif de projection 13 est formé de deux lentilles convergentes "de Fresnel" $L_1$ et $L_2$.

a) Caractéristiques communes :

- matériau : métacrylate de méthyle (plexiglas)

- diamètre extérieur : 202 millimètres

- diamètre utile : 192 millimètres

- épaisseur hors tout : 2 millimètres environ

- une face plane

- une face constituée de cercles concentriques dont le profil est conforme au principes des lentilles de Fresnel. vingt six cercles concentriques par millimètre.

- orientation des faces planes : vers l'intérieur de l'objectif

- distance 14 entre les deux faces planes des lentilles $L_1$ et $L_2$ : 264 millimètres.

b) Caractéristiques particulières :

- lentille $L_1$ : distance focale $F_1$ : 365 millimètres

- lentille $L_2$ : distance focale $F_2$ : 562 millimètres

- objectif $(L_1 + L_2)$ : distance focale : 254 millimètres

lentille $L_2$ dirigée vers l'écran de projection

lentille $L_1$ dirigée vers l'écran cathodique.

- distance 15 écran cathodique/lentille $L_1$ : exemple 230 millimètres

- diamètre du diaphragme 16 : 137 millimètres.

L'écran de projection 17 est monté sur un support 18. L'écran, proprement dit 17 est composé d'une protection transparente 19 et d'une surface réfléchissante 20, l'ensemble est maintenu en place dans un berceau 21.

Le dispositif pour projeter des images de télévision sur un grand écran comporte de très nombreux avantages par rapport aux autres dispositifs et procédés actuels.

- Il ne présente pas de particularités notoires par rapport aux téléviseurs courants en ce qui concerne les circuits électroniques. Il est adaptable à tous les standards de télévision connus à ce jour.

- Sa construction ne nécessite pas de moyens sophistiqués ou importants.

- Sa consommation électrique est de l'ordre de 100 W/h seulement.

- Son poids est très faible par rapport aux appareils cités plus haut.

- Son encombrement au sol est de l'ordre de 0,3 m2 seulement, écran non compris.

- Son utilisation est d'une très grande simplicité.

- Son prix est particulièrement bas (quatre à cinq fois moindre que celui des appareils actuels).

- Le service après-vente peut être assuré par les professionnels compétents en dépannage de télévision couleurs classique.

Le procédé selon l'invention consiste à alimenter, en surtension, un unique tube cathodique couleurs, à inverser les polarités d'alimentation des anodes puisque l'optique renverse l'image et à utiliser comme objectif optique, une seule optique à très faibles pertes lumineuses telles que des lentilles à échelons de Fresnel et à projeter l'image sur un écran adéquat.

## REVENDICATIONS

1. Procédé pour projeter des images de télévision sur un grand écran, opaque ou translucide, de type connu, caractérisé par le fait que l'on utilise un seul tube cathodique couleurs (1) et une seule optique à très faibles pertes lumineuses, formée par deux lentilles (L₁ et L₂), convergentes, à échelons de Fresnel.

2. Procédé pour projeter des images de télévision sur un grand écran selon la revendication 1 caractérisé par le fait que la tension d'alimentation est supérieure de 10 à 30 % à la tension normale préconisée pour le tube cathodique couleurs (1) utilisé dans un poste de télévision couleurs actuels.

3. Procédé pour projeter des images de télévision sur un grand écran selon l'une quelconque des revendications 1 ou 2 caractérisé par le fait que l'axe du tube cathodique (1) est disposé dans l'axe optique, qu'il est alimenté en surtension, que les polarités d'alimentation des anodes sont inversées et que l'unique optique (13) est formée par deux lentilles convergentes à échelons de Fresnel (L₁ et L₂).

4. Dispositif pour la mise en oeuvre du procédé selon l'une quelconque des revendications 1, 2 ou 3 caractérisé par le fait qu'il est composé d'un boîtier (3) qui contient une platine (2) qui porte le tube cathodique couleurs (1) dont l'axe est dans l'axe optique (XY), à sa partie avant est disposée une unique optique (13) qui est composée de deux lentilles (L₁ et L₂) convergentes, à échelons de Fresnel, les faces planes sont orientées vers l'intérieur de l'objectif (13).

5. Dispositif pour la mise en oeuvre du procédé selon l'une quelconque des revendications 1, 2, 3 ou 4 caractérisé par le fait que pour un écran cathodique de trente six centimètres de diagonale, les dispositions techniques sont les suivantes :

- Si la tension d'alimentation normale est de 18 KV, la tension préconisée est de 23 KV.

- L'objectif de projection (13) est formé de deux lentilles convergentes "de Fresnel" (L₁ et L₂).

a) <u>Caractéristiques communes</u> :

- matériau : métacrylate de méthyle (plexiglas)

- diamètre extérieur : 202 millimètres

- diamètre utile : 192 millimètres

- épaisseur hors tout : 2 millimètres environ

- une face plane

- une face constituée de cercles concentriques dont le profil est conforme au principe des lentilles de Fresnel. Vingt six cercles concentriques par millimètre.

- orientation des faces planes : vers l'intérieur de l'objectif.

- distance (14) entre les deux faces planes des lentilles ($L_1$ et $L_2$) : 264 millimètres.

b) Caractéristiques particulières :

- lentille ($L_1$) : distance focale ($F_1$) : 365 millimètres

- lentille ($L_2$) : distance focale ($F_2$) : 562 millimètres

- objectif ($L_1$ et $L_2$) : distance focale : 254 millimètres

lentille ($L_2$) dirigée vers l'écran de projection

lentille ($L_1$) dirigée vers l'écran cathodique.

- distance (15) écran cathodique/lentille ($L_1$) : exemple 230 millimètres

- diamètre du diaphragme (16) : 137 millimètres.

6. Dispositif pour la mise en oeuvre du procédé selon l'une quelconque des revendications 1, 2, 3, 4 ou 5 caractérisé par le fait que le boîtier (3) est muni de roulettes (4) disposées de manière à ce que le boîtier (3) puisse être basculé, en pivotant sur ses roulettes arrière et en dégageant les roulettes avant du sol et ainsi reposer sur sa partie arrière qui est en porte-à-faux, pour être en position de projection et former un angle ( $\alpha$ )voisin de 20° entre l'axe du faisceau lumineux (XY) et le sol, ou être en position horizontale, en reposant sur toutes ses roulettes (4) au repos.

FIG-1

0075495

1/1

FIG-2

**Office européen**
**des brevets**

# RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | IEEE TRANSACTIONS ON CONSUMER ELECTRONICS, vol.CE-25, no.4, août 1979, IEEE, New York (US) N. ITOH et al.: "New color video projection system with glass optics and three primary color tubes for consumer use", pages 497 à 502 * page 497, colonne de gauche, lignes 18-22; page 498, colonne de gauche, lignes 7-8; page 501, colonne de gauche, lignes 15-16; table II * | 1 | H 04 N 9/31 |
| A | US-A-4 074 322 (CAMMILLERI) * colonne 1, lignes 33-43; colonne 11, lignes 2-5; figures 1,4 * | 1 | |
| A | FUNKSCHAU, vol.52, no.22, octobre 1980, Munich (DE) "Farbfernsehprojektoren", pages 71 à 75 * page 71, colonne de gauche, ligne 19 à page 72, colonne de gauche, ligne 23; figures 2,4 * | 1 | **DOMAINES TECHNIQUES RECHERCHES (Int. Cl. ³)**<br><br>H 04 N |
| A | DE-A-2 550 866 (MATSUSHITA) * page 2, lignes 2-27 * | 1,2 | |

Le présent rapport de recherche a été établi pour toutes les revendications

| Lieu de la recherche | Date d'achèvement de la recherche | Examinateur |
|---|---|---|
| LA HAYE | 20-09-1982 | ZANELLA C.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03 82